# EUROPÄISCHE PATENTSCHRIFT

(11) **EP 1 580 364 B1**
(45) Veröffentlichungstag und Bekanntmachung des Hinweises auf die Patenterteilung: **06.01.2010**
(21) Anmeldenummer: 05001159.2
(22) Anmeldetag: 21.01.2005
(51) Int. Cl.: E05B 65/19, B60R 21/34

(54) **Fahrzeugkarosserie mit einer Verriegelungsvorrichtung für die Frontklappe**
Vehicle body with a locking device for the front hood
Carrosserie de véhicule avec dispositif de verrouillage pour le capot avant

(30) Priorität: 26.03.2004 DE 102004015035
(43) Veröffentlichungstag der Anmeldung: 28.09.2005
(73) Patentinhaber: AUDI AG, 85045 Ingolstadt (DE)
(72) Erfinder: Moser, Sibylle, 85051 Ingolstadt (DE); Stein, Jürgen, 38106 Braunschweig (DE); Insel, Olaf, 38179 Rothemühle (DE); Brandes, Eckard, 38543 Hillerse (DE); Strüber, Frank, 85098 Grossmehring (DE)
(74) Vertreter: Engelhardt, Harald

(56) Entgegenhaltungen:
- DE-A1- 4 000 904
- DE-A1- 10 220 535
- DE-A1- 10 314 968
- DE-A1- 10 356 310

## Beschreibung

Die Erfindung bezieht sich auf eine Fahrzeugkarosserie mit einem Seitenteile umfassenden Vorbau, einer zwischen den Seitenteilen angeordneten Frontklappe und einer Verriegelungsvorrichtung zum Verriegeln der Frontklappe mit den Seitenteilen, wobei die Verriegelungsvorrichtung mehrere in Fahrtrichtung des Fahrzeuges hintereinander angeordnete Verriegelungselemente umfasst.

Eine gattungsgemäße Fahrzeugkarosserie ist aus der DE 102 20 535 A1 bekannt. Aus der DE 40 00 904 C2 sind die jeweils zwischen zwei hintereinander liegenden Verriegelungselementen liegenden Zonen des Vorbaus als Deformationszonen längsversteifungsfrei ausgebildet. Dadurch soll ein möglichst großer Teil der kinetischen Energie bei einem Frontaufprall in Verformungsarbeit umgesetzt und sichergestellt werden, dass keine starren Bauteile durch die Trennwand in den Fahrzeuginnenraum eindringen.

Die DE 197 44 904 A1 zeigt und beschreibt eine Verriegelungsanordnung für eine schwenkbare Front- oder Heckklappe eines Fahrzeuges. Zur sicheren Verriegelung der Klappe am Fahrzeugaufbau bei geringem Platzbedarf sind bolzenartige Riegel vorgesehen, die federbelastet in Führungsböcken aufgenommen sind.

Der vorliegenden Erfindung liegt die Aufgabe zugrunde, eine Verriegelungsvorrichtung für die Frontklappe einer Fahrzeugkarosserie zu schaffen, die kostengünstig herstellbar ist, eine zuverlässige Verriegelung gewährleistet und insbesondere das Verletzungsrisiko eines auf die Frontklappe aufschlagenden Fußgängers reduziert.

Die Aufgabe wird durch die kennzeichnenden Merkmale des Patentanspruchs 1 gelöst.

Als Verriegelungsvorrichtung werden bevorzugt mehrere Paare einander gegenüberliegender Verriegelungselemente mit je einem Riegel eingesetzt. Jeder Riegel ist mit einer Keilfläche versehen, die so angeordnet ist, dass beim Schließen der Frontklappe und bei einer Krafteinwirkung ab einer vorbestimmten Größenordnung auf die geschlossene Frontklappe über die Keilfläche der Riegel gegen die Kraft einer Feder zurückweicht. Damit wird nicht nur eine Verriegelung der Frontklappe nach dem Prinzip eines Fallenschlosses erreicht, sondern auch sichergestellt, dass bei einem Aufschlag eines Fußgängers auf die Frontklappe diese nachgeben kann, wodurch das Verletzungsrisiko des Fußgängers reduziert wird.

Bei den eingangs beschriebenen bekannten Lösungen sind zwar mehrere, in Fahrtrichtung des Fahrzeuges hintereinander angeordnete Verriegelungselemente vorhanden, jedoch erlauben diese kein "Eintauchen" der Frontklappe, wenn ein Fußgänger aufschlägt.

Im normalen Betrieb wird beim Schließen der Frontklappe über die Keilfläche des Riegels dieser gegen die Kraft einer Feder zurückbewegt, bis der Riegel in eine Ausnehmung der Frontklappe eingreifen kann und der Riegel durch die Kraft der Feder in seine Ausganglage zurückkehrt. In dieser Position sichert der Riegel die Verbindung, gewährleistet also die Verriegelung der Frontklappe.

Zur Entriegelung wird in an sich bekannter Weise der Riegel gegen die Kraft der Feder aus der Ausnehmung herausgezogen, wodurch sich die Frontklappe öffnen lässt.

Wie vorstehend angedeutet, lässt sich bei geschlossener Frontklappe, also bei bestehender Verriegelung, durch entsprechende Krafteinwirkung auf die Frontklappe der Riegel zurückbewegen und die Frontklappe über ihre Schließstellung hinaus nach unten drücken. Durch diesen bei einem Fußgängeraufprall gegebenen Bewegungsablauf wird durch die Reibkräfte und Federkräfte im Zusammenhang mit der Riegelbewegung Energie umgewandelt, die den Aufprall des Fußgängers auf die Frontklappe dämpft. Das Maß der Energieumwandlung lässt sich in einfacher Weise durch die Anzahl, Anordnung und Dimensionierung der Verriegelungselemente festlegen. Ein wesentliches Kriterium spielen dabei die Ausbildung der Keilflächen der Riegel und die die Riegel beaufschlagenden Federn. Die Ausgestaltung der Keilflächen und die Federdimensionierungen können dabei so gewählt werden, dass über die Frontklappe verteilt die Verriegelungselemente für verschiedene Kraftniveaus ausgelegt sind. So wird zweckmäßig der Bereich, auf den die Hüfte des Fußgängers aufschlagen kann anders auszulegen sein, als der Bereich eines möglichen Kopfaufschlages.

Die Verriegelungselemente können je nach baulichen Gegebenheiten sowohl in der Frontklappe als auch in den Seitenteilen des Vorbaus angeordnet werden. Besonders zweckmäßig ist es in den meisten Fällen, die Verriegelungselemente an den Seitenteilen des Vorbaus zu befestigen, wobei dann die Riegel der Verriegelungselemente dann in entsprechende Ausnehmungen der Frontklappe eingreifen.

Gemäß einer besonders vorteilhaften Ausgestaltung der Erfindung können die Keilflächen der Riegel mindestens zwei verschiedene Keilwinkel einschließen oder die Keilflächen durch Kurvenflächen gebildet sein.

Wie erwähnt, kann über die Winkel der Keilflächen das Kraftniveau beeinflusst werden. Ändert sich der Winkel über die Keilfläche, dann ist eine Anpassung des Kraftniveaus über den Weg beim Abtauchen der Frontklappe möglich. Es ist vorteilhaft, den zuerst wirkenden Keilwinkel so auszuführen, dass ein Durchschlagen verhindert wird, während der sich anschließende zweite Keilwinkel ein Abtauchen bei einem Kopfaufschlag gewährleistet. Versuche haben gezeigt, dass durch das neue System zur Verriegelung der Frontklappe der HIC-Wert bei einem Kopfaufschlag reduziert und dabei gleichzeitig Bauraum eingespart wird, der ansonsten für eine Energieumwandlung durch Deformation notwendig ist.

Gemäß einer vorteilhaften Weiterbildung der Erfindung kann der Riegel des Verriegelungselements zumindest in seinem Verriegelungsbereich einen kreisrunden Querschnitt aufweisen. Dadurch ist nicht nur eine einfache Herstellung gewährleistet, sondern es wird darüber hinaus die weiter unten näher beschriebene Möglichkeit geschaffen, dass Verriegelungselemente auch Scharnierfunktionen mit übernehmen.

Zur Betätigung der Verriegelungselemente können alle Verriegelungselemente einer Frontklappenseite durch eine gemeinsame Betätigungseinrichtung betätigbar sein. Dies kann bspw. in Form einer Schiebeplatte geschehen, wobei an der Schiebeplatte für jedes Verriegelungselement eine Steuerkurve vorgesehen ist, die mit einem Verbindungsteil des Riegels zusammenwirkt.

Besonders einfach ist es, wenn die Steuerkurve durch eine Aussparung in der Schiebeplatte erzeugt ist und das Verbindungsteil zum Riegel ein in die Aussparung eingreifender Führungsbolzen ist. Diese Ausgestaltung lässt sich nicht nur kostengünstig herstellen; sie stellt darüber hinaus eine unter allen Betriebsbedingungen sehr zuverlässige Betätigung dar. Die Schiebeplatte selbst kann durch in an sich bekannte Maßnahmen, bspw. durch ein Gestänge oder einen Bowdenzug betätigt werden.

In weiterer Ausgestaltung kann die Steuerkurve so ausgeführt sein, dass eine Zurückbewegung der Riegel möglich ist, wenn sich die Frontklappe in ihrer geschlossenen Stellung befindet. Diese Zurückbewegung der Riegel stellt sicher, dass bei einem Fußgängeraufschlag auf die Frontklappe die Riegel energieumwandelnd zurückweichen können.

Vorteilhaft ist, wenn dasjenige Paar gegenüberliegender Verriegelungselemente, welches der Fahrzeugfront am entferntesten liegt, eine Scharnierfunktion für die Frontklappe ausübt. Dazu ist die Betätigungsvorrichtung für diese Verriegelungselemente so ausgeführt, dass in der Verriegelungsposition eine Zurückbewegung der Riegel möglich ist und in der Entriegelungsposition die Riegel drehbar, jedoch örtlich fixiert bleiben. Durch diese Ausgestaltung die voraussetzt, dass die Riegel zumindest in ihrem Verriegelungsbereich einen kreisrunden Querschnitt aufweisen, können in einfacher Weise separate Scharniere für die Frontklappe eingespart werden.

Zur konstruktiven Umsetzung der Scharnierfunktion der Verriegelungselemente kann die Schiebeplatte eine etwa rechtwinklig verlaufende Steuerkurve umfassen, wobei ein Schenkel der Steuerkurve entsprechend der möglichen Riegelbewegung verläuft und der andere Schenkel in seiner Länge dem Betätigungsweg und der Bewegungsrichtung der Schiebeplatte entspricht. Befindet sich die Schiebeplatte in der entriegelten Stellung, dann befindet sich der mit dem Riegel verbundene Führungsbolzen am Ende des entsprechenden Schenkels, wodurch eine Lagerung und Führung gebildet wird. In dieser Position kann die Frontklappe um den Führungsbolzen verschwenkt werden. Es versteht sich von selbst, dass zur Umsetzung der Scharnierfunktion zwei entsprechend ausgebildete Verriegelungselemente einander gegenüberliegend im entsprechenden Randbereich der Frontklappe angeordnet sein müssen. Auch derjenige Bereich, in den die Riegel mit ihrem kreisrunden Querschnitt eingreifen, ist dementsprechend als Lagerstelle vorzusehen.

Die Verriegelungselemente können gemäß einer vorteilhaften Weiterbildung der Erfindung durch Elektromagnete betätigbar sein. Bei dieser Lösung werden nicht nur mechanische Bauteile eingespart; es ist vielmehr auch möglich, die Elektromagneten unterschiedlich anzusteuern. Dies ist unter anderem wichtig, wenn zwei Verriegelungselemente eine Scharnierfunktion übernehmen. In diesem Fall bleiben die beiden entsprechenden Riegel in Eingriff, während alle übrigen Riegel durch die Elektromagneten zurückbewegt werden.

Um gleichmäßige seitliche Fugen zwischen der Frontklappe und den sich anschließenden Seitenteilen bzw. den vorderen Kotflügeln zu erreichen ist es von Vorteil, wenn an einer die Seitenteile in Fahrtrichtung vorne verbindenden Strebe eine Zentriervorrichtung für die Haube in Fahrzeugquerrichtung angeordnet ist. In diesem Zusammenhang ist anzumerken, dass durch die relativ vielen Verriegelungselemente, welche Abstützungen bilden, eine Reduzierung der Klappensteifigkeit möglich ist, so dass Material und Gewicht eingespart werden können.

Ausführungsformen der Erfindung sind in der Zeichnung dargestellt und werden nachfolgend näher beschrieben. Es zeigen
- Figur 1: in perspektivischer Darstellung den Vorbau eines Personenkraftwagens mit Frontmotor und geöffneter Frontklappe;
- Figur 2: eine Schnittdarstellung im Anschlussbereich der Frontklappe an ein Seitenteil des Vorbaus sowie ein Verriegelungselement zum Verbinden beider Teile;
- Figur 3: eine Darstellung ähnlich derjenigen in Figur 2, jedoch mit einem elektromagnetisch betätigbaren Verriegelungselement und
- Figur 4: an einem Seitenteil angeordnete Verriegelungselemente zusammen mit einer Betätigungsvorrichtung für diese Verriegelungselemente.

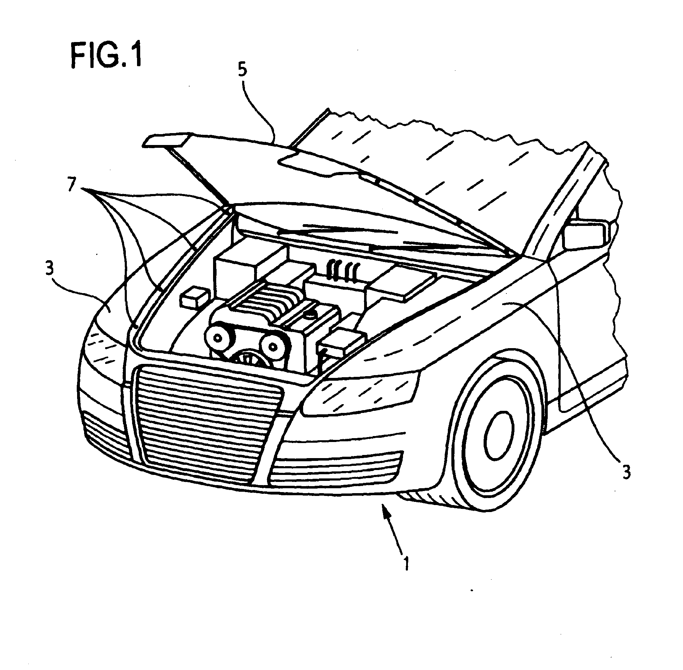

In perspektivischer Ansicht zeigt Figur 1 den Vorbau eines Personenkraftwagens mit einem Frontmotor. Der Vorbau 1 umfasst zwei Seitenteile 3, welche teilweise durch die Kotflügel des Fahrzeuges gebildet sind. Der sich zwischen den Seitenteilen 3 erstreckende Motorraum des Fahrzeugs ist durch eine Frontklappe 5 verschließbar.

Zur Arretierung der Frontklappe 5 an den Seitenteilen 3 sind an jedem Seitenteil 3 vier Verriegelungselemente 7 angeordnet. Die Verriegelungselemente 7 sind so ausgebildet, dass sie beim Schließen der Frontklappe 5 selbsttätig verriegeln. Die Verriegelung kann durch eine Betätigungseinrichtung gelöst und anschließend die Frontklappe 5 geöffnet werden.

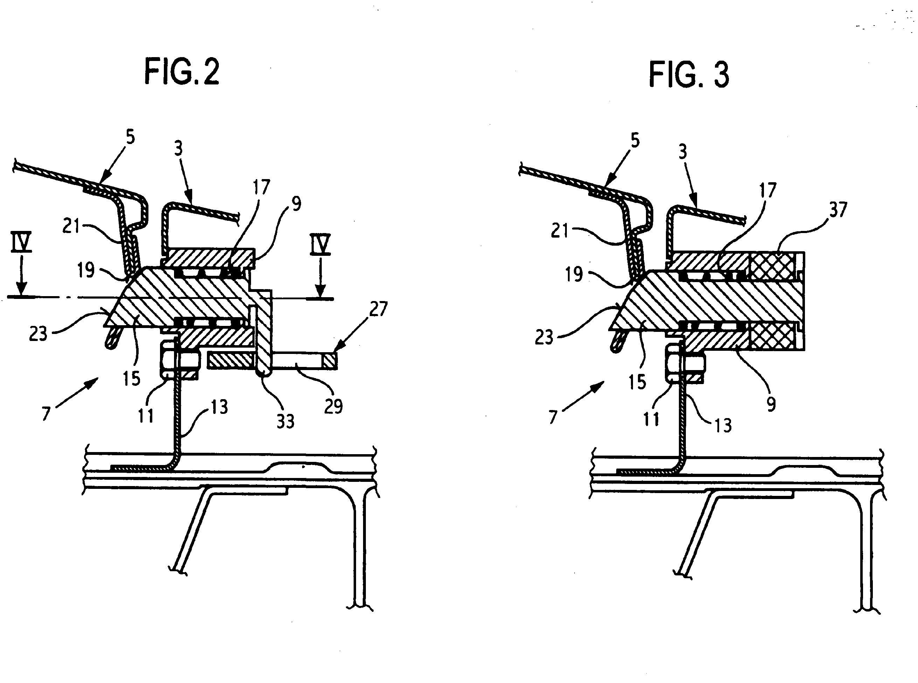

Die Figur 2 zeigt eines der übereinstimmend ausgeführten Verriegelungselemente 7 im Detail. Das Verriegelungselement 7 besteht im Wesentlichen aus einem Gehäuse 9, das durch eine Schraube 11 an einem senkrechten Steg 13 des Seitenteiles 3 befestigt ist.

In dem Gehäuse 9 ist ein zylindrisch ausgeführter Riegel 15 so aufgenommen, dass er gegen die Kraft einer Feder 17 axial bewegbar ist. Anschläge am Gehäuse 9 bzw. Riegel 15 definieren die Eingriffsstellung des Riegels 15, in der er in eine Aussparung 19 in einem etwa senkrechten Steg 21 der Frontklappe 5 eingreift und die Frontklappe 5 in ihrer Schließstellung sichert.

Beim Schließen der Frontklappe 5 wirkt der Steg 21 der Frontklappe 5 auf die Keilfläche 23 des Riegels 15 ein, wodurch der Riegel 15 gegen die Kraft der Feder 17 axial verschoben wird bis der Riegel 15 der Aussparung 19 in dem senkrechten Steg 21 der Frontklappe 5 gegenüberliegt und in diese hineingleitet.

Wird bei verriegelter Frontklappe 5 durch einen Fußgängeraufprall eine Kraft auf die Frontklappe ausgeübt, dann taucht die Frontklappe 5 ein, wodurch ein Teil der Aufprallenergie umgewandelt wird. Dabei gleitet der obere Rand der Aussparung 19 an der Keilfläche 23 entlang und drückt den Riegel 15 gegen die Kraft der Feder 17 aus der Aussparung 19 heraus.

Wie die Zeichnung zeigt, ist die Keilfläche 23 zweigeteilt, d.h. sie weist zwei verschiedene Keilwinkel auf.

Die unterschiedlichen Abschnitte der Keilfläche 23 sind an die verschiedenen Aufgaben des Verriegelungselementes 7 angepasst. Während die in der Zeichnung unten gelegene Keilfläche in ihrer Schräge und Position so ausgeführt ist, dass sie beim normalen Schließen der Frontklappe 5 mit dem unteren Randbereich des Steges 21 der Frontklappe 5 zusammenwirkt, ist der in der Zeichnung oben dargestellte Abschnitt der Keilfläche 23 zur Einleitung der Kräfte aus dem oberen Rand 19 der Aussparung des Steges 21 bestimmt, wie dies bei einem Fußgängeraufprall auf die Frontklappe 5 zum Tragen kommt.

Da in beiden Fällen, also beim Schließen, als auch beim Fußgängeraufprall die durch die Feder 17 ausübbare Kraft konstant ist, gleichzeitig jedoch erwünscht ist, dass zum Schließen der Frontklappe 5 ein geringes Kraftniveau notwendig ist und bei einem Fußgängeraufprall Energie mit einem relativ hohen Kraftniveau umgewandelt werden soll, sind die jeweils zusammenwirkenden Abschnitte des Steges 21 bzw. der Aussparung 19 und der Keilflächen 23 aufeinander abgestimmt. So ist bspw. der beim Schließen der Frontklappe 5 wirksam werdende untere Randbereich des Steges 21 fast parallel zu demjenigen Abschnitt der Keilfläche 23 ausgeführt, auf den dieser Abschnitt beim Schließen der Frontklappe 5 drückt. Gerade umgekehrt sind die Verhältnisse in Bezug auf den oberen Rand der Aussparung 19 und demjenigen Abschnitt der Keilfläche 23, auf den dieser Abschnitt bei einem Fußgängeraufprall einwirkt. In diesem Fall ist es erwünscht, dass eine relativ hohe Kraft aufgenommen werden kann.

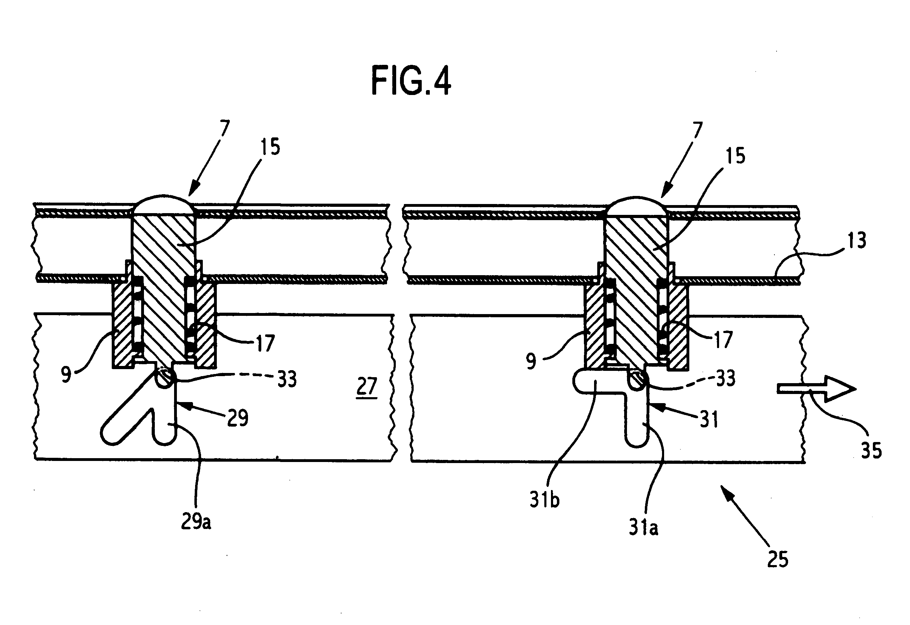

Figur 4 zeigt den Schnitt IV-IV aus Figur 2, ergänzt um ein weiteres Verriegelungselement 7 und eine gemeinsame Betätigungseinrichtung 25 für diese beiden Verriegelungselemente 7. Die Betätigungseinrichtung umfasst eine Schiebeplatte 27 mit Steuerkurven 29 und 31 für die beiden Verriegelungselemente 7. Die Steuerkurven 29 und 31 sind so in der Schiebeplatte 27 ausgeführt, dass ein mit dem Riegel 15 verbundener Führungsbolzen 33 in die Steuerkurven 29 und 31 eingreifen kann, wie dies in Seitenansicht aus Figur 2 ersichtlich ist.

Figur 4 zeigt die Schiebeplatte 27 der Betätigungseinrichtung 25 in derjenigen Stellung, in der die Frontklappe 5 mit den Seitenteilen 3 verriegelt ist. Dabei stellen axial zu den Riegeln 15 verlaufende Schenkel 29a und 31 a sicher, dass die Riegel 15 zurückweichen können.

Wird die Schiebeplatte 27 in Richtung des Pfeiles 35 zum Entriegeln der Frontklappe 5 bewegt, dann wird der Riegel 15 des in der Zeichnung links dargestellten Verriegelungselementes 7 aus der Aussparung 19 des Steges 21 der Frontklappe 5 herausgezogen und gibt diese frei.

Das in Figur 4 rechts dargestellte Verriegelungselement 7 kann neben seiner Verriegelungsfunktion, der Energieumwandlung bei einem Fußgängeraufprall darüber hinaus auch noch die Funktion eines Scharniers übernehmen.

Wie vorstehend beschrieben, wird beim Entriegeln der Frontklappe 5 die Schiebeplatte 27 in Richtung des Pfeils 35 bewegt. Dabei gelangt der der Führungsbolzen 33 in Anlage an das Ende des Schenkels 31 b der Steuerkurve 31. Dies bedeutet, dass der Riegel 15 in der Aussparung 19 des Stegs 21 der Frontklappe 5 verbleibt und da der eingreifende Abschnitt des Riegels 15 kreisrund ausgeführt ist, darüber ein Verschwenken der Frontklappe 5 möglich ist.

Schließlich zeigt Figur 3 ein Verriegelungselement 7, welches bis auf seine Betätigung mit den vorstehend beschriebenen Verriegelungselementen 7 übereinstimmt. Zur Betätigung ist dort jedoch keine Schiebeplatte, sondern ein Elektromagnet 37 vorgesehen. Durch den Elektromagnet lässt sich besonders einfach steuern, ob eine Entriegelung gewünscht wird oder ob das entsprechende Verriegelungselement 7 nach Entriegelung der übrigen Verriegelungselemente 7 eine Scharnierfunktion ausüben soll.

## Patentansprüche

1. Fahrzeugkarosserie mit einem Seitenteile umfassenden Vorbau (1), einer zwischen den Seitenteilen (3) angeordneten Frontklappe (5) und einer Verriegelungsvorrichtung zum Verriegeln der Frontklappe (5) mit den Seitenteilen (3), wobei die Verriegelungsvorrichtung mehrere in Fahrtrichtung des Fahrzeuges hintereinander angeordnete Verriegelungselemente (7) umfasst und in mindestens zwei einander gegenüber liegenden Verriegelungselementen (7) je einen Riegel (15) mit einer Keilfläche (23) aufgenommen ist, derart, und bei geschlossener, unbelasteter Frontklappe (5) eine der Keilfläche (23) gegenüberliegende Sperrfläche die Frontklappe (5) sichert, **dadurch gekennzeichnet, dass** beim Schließen der Frontklappe (5) und bei einer Krafteinwirkung ab einer vorbestimmten Größenordnung auf die geschlossene Frontklappe (5) über die Keilfläche (23) der Riegel (15) gegen die Kraft einer Feder (17) zurückweicht, dass die Keilfläche (23) mindestens zwei verschiedene Keilwinkel einschließt oder durch eine Kurvenfläche gebildet ist, und dass die Steigung der Keilfläche (23) bzw. die Kurvenfläche so gewählt ist, dass in der ersten Bewegungsphase des Riegels (15) eine höhere Betätigungskraft als im weiteren Bewegungsablauf notwendig ist.

2. Fahrzeugkarosserie nach Anspruch 1, **dadurch gekennzeichnet, dass** der Riegel (15) zumindest in seinem Verriegelungsbereich einen kreisrunden Querschnitt aufweist.

3. Fahrzeugkarosserie nach Anspruch 1 oder 2, **dadurch gekennzeichnet, dass** alle Verriegelungselemente (7) einer Frontklappenseite durch eine gemeinsame Betätigungseinrichtung (25) entriegelbar sind.

4. Fahrzeugkarosserie nach Anspruch 3, **dadurch gekennzeichnet, dass** die Betätigungseinrichtung (25) eine Schiebeplatte (27) umfasst, wobei an der Schiebeplatte (27) für jedes Verriegelungselement (7) eine Steuerkurve (29,31) vorgesehen ist die mit einem Verbindungsteil des Riegels (15) zusammenwirkt.

5. Fahrzeugkarosserie nach Anspruch 4, **dadurch gekennzeichnet, dass** die Steuerkurve (29,31) durch eine Aussparung in der Schiebeplatte (27) erzeugt ist und das Verbindungsteil ein in die Aussparung eingreifender Führungsbolzen (33) ist.

6. Fahrzeugkarosserie nach einem der Ansprüche 4 oder 5, **dadurch gekennzeichnet, dass** die Steuerkurve (29,31) eine Zurückbewegung der Riegel (15) zulässt wenn sich die Frontklappe (5) in ihrer geschlossenen Stellung befindet.

7. Fahrzeugkarosserie nach einem der Ansprüche 2 bis 6, **dadurch gekennzeichnet, dass** dasjenige Paar gegenüberliegender Verriegelungselemente (7), welches der Fahrzeugfront am entferntesten liegt eine Scharnierfunktion für die Frontklappe (5) ausüben kann, wozu die Betätigungsvorrichtung (25) für diese Verriegelungselemente (7) so ausgeführt ist, dass in der Verriegelungsposition eine Zurückbewegung der Riegel (15) möglich ist und in der Entriegelungsposition die Riegel (15) drehbar, jedoch örtlich fixiert verbleiben.

8. Fahrzeugkarosserie nach Anspruch 7, **dadurch gekennzeichnet, dass** die Schiebeplatte (27) eine etwa rechtwinkelig verlaufende Steuerkurve (31) umfasst, wobei ein Schenkel (31a) der Steuerkurve (31) entsprechend der möglichen Riegelbewegung verläuft und der andere Schenkel (31 b) in seiner Länge dem Betätigungsweg der Schiebeplatte (27) entspricht.

9. Fahrzeugkarosserie nach einem der Ansprüche 1 bis 3, **dadurch gekennzeichnet, dass** jedes Verriegelungselement (7) durch einen Elektromagnet (37) betätigbar ist.

10. Fahrzeugkarosserie nach einem der Ansprüche 1 bis 9, **dadurch gekennzeichnet, dass** an einer die Seitenteile (3) in Fahrtrichtung vorne verbindenden Strebe eine Zentriervorrichtung für die Frontklappe (5) in Fahrzeugquerrichtung angeordnet ist.

## Claims

1. Vehicle body having a front end (1) which comprises side parts, having a front hood (5) which is arranged between the side parts (3), and having a locking device for locking the front hood (5) to the side parts (3), with the locking device comprising a plurality of locking elements (7) which are arranged one behind the other in the direction of travel of the vehicle, and with in each case one bolt (15) with a wedge surface (23) being held in at least two locking elements (7) situated opposite one another, in such a way that, when the front hood (5) is closed and unloaded, a blocking surface which is situated opposite the wedge surface (23) secures the front hood (5), **characterized in that**, during the closure of the front hood (5) and in the event of a force above a predetermined order of magnitude acting on the closed front hood (5) via the wedge surface (23), the bolt (15) is displaced back counter to the force of a spring (17), **in that** the wedge surface (23) encompasses at least two different wedge angles or is formed by a curved surface, and **in that** the gradient of the wedge surface (23) or of the curved surface is selected such that a higher actuating force is required in the first movement phase of the bolt (15) than in the further movement profile.

2. Vehicle body according to Claim 1, **characterized in that** the bolt (15) has a circular cross section at least in its locking region.

3. Vehicle body according to Claim 1 or 2, **characterized in that** all the locking elements (7) of one side of the front hood can be unlocked by means of a common actuating device (25).

4. Vehicle body according to Claim 3, **characterized in that** the actuating device (25) comprises a sliding plate (27), with the sliding plate (27) having provided in it, for each locking element (7), a control cam (29, 31) which interacts with a connecting part of the bolt (15).

5. Vehicle body according to Claim 4, **characterized in that** the control cam (29, 31) is produced by means of a cutout in the sliding plate (27) and the connecting part is a guide pin (33) which engages into the cutout.

6. Vehicle body according to one of Claims 4 or 5, **characterized in that** the control cam (29, 31) enables a backward movement of the bolt (15) when the front hood (5) is in its closed position.

7. Vehicle body according to one of Claims 2 to 6, **characterized in that** that pair of opposite locking elements (7) which is situated furthest away from the front of the vehicle can perform the function of a hinge for the front hood (5), for which purpose the actuating device (25) for said locking elements (7) is designed such that, in the locking position, a backward movement of the bolt (15) is possible, and in the unlocking position, the bolts (15) remain rotatable but positionally fixed.

8. Vehicle body according to Claim 7, **characterized in that** the sliding plate (27) comprises a control cam (31) which runs approximately at right angles, with one limb (31a) of the control cam (31) running correspondingly to the possible bolt movement and the other limb (31b) corresponding, in its length, to the actuating movement of the sliding plate (27).

9. Vehicle body according to one of Claims 1 to 3, **characterized in that** each locking element (7) can be actuated by means of an electromagnet (37).

10. Vehicle body according to one of Claims 1 to 9, **characterized in that** a centring device for centring the front hood (5) in the vehicle transverse direction is provided on a strut which connects the side parts (3) at the front in the direction of travel.

## Revendications

1. Carrosserie de véhicule comprenant une partie avant (1) comprenant des parties latérales, un volet avant (5) disposé entre les parties latérales (3) et un dispositif de verrouillage pour verrouiller le volet avant (5) aux parties latérales (3), le dispositif de verrouillage comprenant plusieurs éléments de verrouillage (7) disposés les uns derrière les autres dans la direction de conduite du véhicule, et un verrou respectif (15) avec une surface de clavette (23) étant reçu dans au moins deux éléments de verrouillage (7) en regard l'un de l'autre, de telle sorte que lorsque le volet avant (5) est fermé et non contraint, une surface de blocage opposée à la surface de clavette (23) fixe le volet avant (5), **caractérisée en ce que** lors de la fermeture du volet avant (5) et dans le cas d'une application de force à partir d'un ordre de grandeur prédéterminé sur le volet avant fermé (5) par le biais de la surface de clavette (23), le verrou (15) revient en arrière à l'encontre de la force d'un ressort (17), **en ce que** la surface de clavette (23) forme au moins deux angles de clavette différents ou est formée par une surface courbe, et **en ce que** la pente de la surface de clavette (23) ou la surface courbe est choisie de telle sorte que dans la première phase du déplacement du verrou (15) on ait besoin d'une force d'actionnement plus importante que dans le reste du déroulement du déplacement.

2. Carrosserie de véhicule selon la revendication 1, **caractérisée en ce que** le verrou (15) présente une section transversale ronde circulaire au moins dans sa région de verrouillage.

3. Carrosserie de véhicule selon la revendication 1 ou 2, **caractérisée en ce que** tous les éléments de verrouillage (7) d'un côté du volet avant peuvent être déverrouillés par un dispositif d'actionnement commun (25).

4. Carrosserie de véhicule selon la revendication 3, **caractérisée en ce que** le dispositif d'actionnement (25) comprend une plaque coulissante (27), une courbe de came de commande (29, 31) étant prévue sur la plaque coulissante (27) pour chaque élément de verrouillage (7), laquelle coopère avec une partie de connexion du verrou (15).

5. Carrosserie de véhicule selon la revendication 4, **caractérisée en ce que** la courbe de came de commande (29, 31) est produite par un évidement dans la plaque coulissante (27) et la partie de connexion est un boulon de guidage (33) venant en prise dans l'évidement.

6. Carrosserie de véhicule selon l'une quelconque des revendications 4 ou 5, **caractérisée en ce que** la courbe de came de commande (29, 31) permet un déplacement en arrière des verrous (15) lorsque le volet avant (5) se trouve dans sa position fermée.

7. Carrosserie de véhicule selon l'une quelconque des revendications 2 à 6, **caractérisée en ce que** la paire d'éléments de verrouillage opposés (7), qui se situe le plus loin de l'avant du véhicule, peut exercer une fonction de charnière pour le volet avant (5), de sorte que le dispositif d'actionnement (25) pour ces éléments de verrouillage (7) soit réalisé de telle sorte que dans la position de verrouillage, un mouvement de retour en arrière des verrous (15) soit possible et que dans la position de déverrouillage, les verrous (15) puissent tourner, mais restent fixés dans leur position.

8. Carrosserie de véhicule selon la revendication 7, **caractérisée en ce que** la plaque coulissante (27) comprend une courbe de came de commande (31) s'étendant approximativement à angle droit, une branche (31a) de la courbe de came de commande (31) s'étendant d'une manière correspondant au mouvement possible du verrou, et l'autre branche (31b) correspondant, dans sa longueur, à la course d'actionnement de la plaque coulissante (27).

9. Carrosserie de véhicule selon l'une quelconque des revendications 1 à 3, **caractérisée en ce que** chaque élément de verrouillage (7) peut être actionné par un électroaimant (37).

10. Carrosserie de véhicule selon l'une quelconque des revendications 1 à 9, **caractérisée en ce qu'**un dispositif de centrage pour le volet avant (5) est disposé dans la direction transversale du véhicule sur un montant avant dans la direction de conduite, reliant les parties latérales (3).
